# EUROPEAN PATENT SPECIFICATION

(11) **EP 1 880 892 B1**
(45) Date of publication and mention of the grant of the patent: **12.02.2014**
(21) Application number: 07112831.8
(22) Date of filing: 20.07.2007
(51) Int. Cl.: B60N 2/28, B60R 22/10, B60R 22/12

(54) **Buckle for restraint belts for motor vehicle safety seats for children**
Schnalle für Rückhaltegurte für Kinder-Sicherheitssitze in Kraftfahrzeugen
Boucle de ceintures de retenue pour sièges de sécurité de véhicules à moteur pour enfants

(30) Priority: 20.07.2006 IT TO20060535
(43) Date of publication of application: 23.01.2008
(73) Proprietor: Novarace S.r.l., 10122 Torino (IT)
(72) Inventor: Novara, Paolo, 10095 Grugliasco (Torino) (IT)
(74) Representative: Rondano, Davide

(56) References cited:
- US-A1- 2004 003 486
- US-A1- 2005 115 035

## Description

The present invention relates to a buckle for restraint belts for motor vehicle safety seats for children, having the features indicated in the preamble of Claim 1. A buckle of this kind is known from US 2004/003486 A1.

More particularly, the invention r elates to a buckle for motor vehicle safety seats for children belonging to the so-called group 0 or 0+, that is to say, intended for children weighing less than 13 kg.

Buckles of the above-specified type are known, which comprise a body of plastic material and a locking member of plastic material as well, wherein the locking member is hinged to the body by means of a metal pin so as to be able to tilt about a tilting axis perpendicular to the direction of insertion of the tongue-like elements between a first locked position, in which it couples the two tongue-like elements to the body, and a second unlocked position, in which it allows the ejection of the tongue-like elements from the body. According to this known solution, the hinge pin of the locking member is therefore a separate component from the locking member. When the buckle is subject to a tensile force tending to uncouple the tongue-like elements from the body, for example as a result of the restraining action of the belts in case of an impact of the vehicle, the load path across the buckle passes in succession through the set of tongue-like elements, the locking member, the hinge pin and the body. All these component must therefore be dimensioned so as to withstand the tensile forces acting on the buckle.

It is an object of the present invention to provide a buckle for restraint belts for motor vehicle safety seats for children which has a smaller number of parts and which can be manufactured at lower costs than the prior art discussed above, and which also allows to reliably meet the prescribed strength requirements.

This and other objects are fully achieved according to the invention by virtue of a buckle having the features defined in the characterizing part of independent Claim 1.

Further advantageous features of the buckle according to the invention are set forth in the dependent claims.

The features and the advantages of the invention will become apparent from the following detailed description, given purely by way of non-limiting example with reference to the appended drawings, in which:
Figure 1 is a perspective view of a buckle for restraint belts for motor vehicle safety seats for children according to a preferred embodiment of the invention, in the locked position; Figures 2, 3 and 4 are perspective views of the body of the buckle of Figure 1 from different points of view;
Figure 5 is a perspective view of the locking member of the buckle of Figure 1;
Figure 6 is a perspective view of the two tongue-like elements of the buckle of Figure 1; and
Figure 7 is a perspective view which shows the locking member and the two tongue-like elements of the buckle of Figure 1, in the locked position.

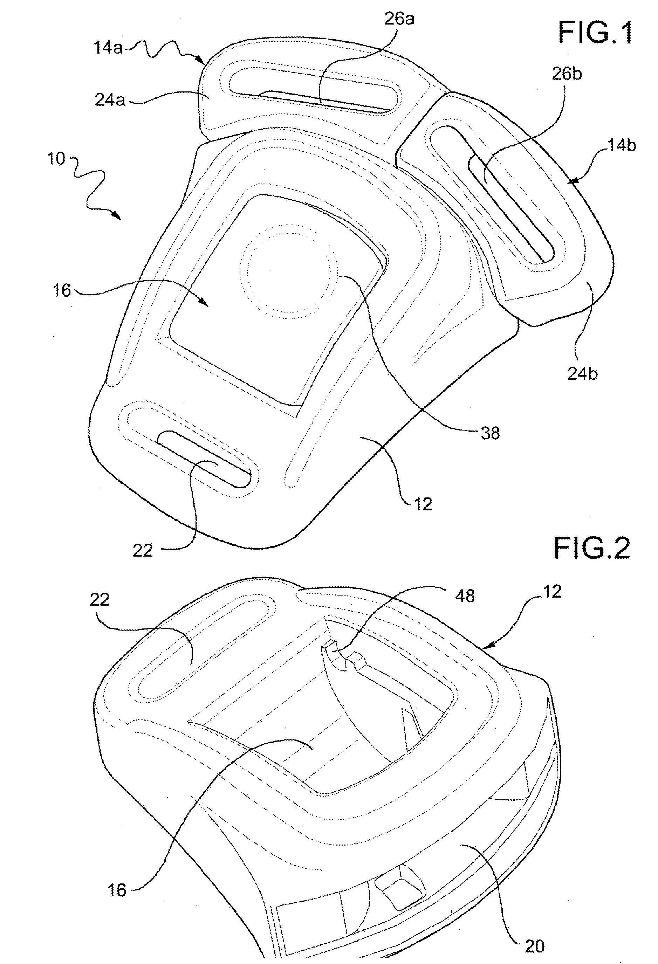

With reference first to Figure 1, a buckle according to the invention is generally indicated 10 and basically comprises a body 12 intended to be attached to the free end of a first belt branch (not shown), a pair of tongue-like elements 14a, 14b intended to be attached each to the free end of a respective belt branch (also not shown), and a locking member 16 capable of assuming a first locked position, in which it couples the two tongue-like elements 14a, 14b to the body 12, and a second unlocked position, in which it allows the ejection of the tongue-like elements 14a, 14b from the body 12.

All the above-listed components of the buckle, that is to say, the body 12, the tongue-like elements 14a, 14b and the locking member 16, are advantageously made of plastic material, if necessary reinforced by means of metal cores.

The body 12 has a cavity 18 which is open upwards and is also in connection with the outside of the body 12 via a front through slit 20, through which the tongue-like elements 14a, 14b can be inserted inside the body 12 to be engaged herein by the locking mechanism, as will be explained in greater detail further on. On the opposite side to the slit 20, the body 12 has a through slot 22 for attachment of the body to the respective belt branch.

Each of the tongue-like elements 14a, 14b has an attachment portion 24a, 24b having a through slot 26a, 26b for attachment of the respective belt branch and a tongue-like portion 28a, 28b adapted to be inserted into the buckle body 12 through the slit 20 to be retained by the locking mechanism of the buckle. The two tongue-like elements 14a, 14b are preferably configured in such a manner that they can be inserted into the buckle body 12 only in pair and not separately. To this end, each tongue-like portion 28a, 28b has a through hole 30a, 30b and a pin 32a, 32b which are aligned in the direction of insertion into the body 12 and are arranged in such a manner that the pin 32a of the first tongue-like element 14a can be inserted into the hole 30b of the second tongue-like element 14b and at the same time the pin 32b of the second tongue-like element 14b can be inserted into the hole 30a of the first tongue-like element 14a. In the illustrated example, the tongue-like portion 28a of the first tongue-like element 14a rests on the tongue-like portion 28b of the second tongue-like element 14b in the assembled condition. The tongue-like portion 28b of the lower tongue-like element, here the second tongue-like element 14b, forms at its bottom a chamfer 34 for making the insertion of the tongue-like element into the buckle body easier and has, immediately after the chamfer 34, a recess 36 adapted to be engaged by the locking member 16, as will be described further on.

The locking member 16 is received in the cavity 18 of the buckle body 12, where it is supported so as to be able to tilt about a tilting axis substantially perpendicular to the direction of insertion of the tongue-like elements 14a, 14b. The locking member 16 comprises an upper plate portion 38 which has a shape corresponding to that of the upper opening of the cavity 18 and acts as a control button by means of which the user can unlock the buckle, that is, can cause the ejection of the tongue-like elements 14a, 14b from the body 12. The locking member 16 further comprises a lower locking portion 40, which extends substantially parallel to the upper plate portion 38 and forms, on its side facing towards this latter, a detent 42 adapted to engage in the recess 36 of the lower tongue-like element 14b. The lower locking portion 40 is co nnected to the upper control portion 3 8 through a pair of connecting legs 44 of curved shape. The two upper 38 and lower 40 portions and the two connecting legs 44 of the locking member 16 are made as a single piece.

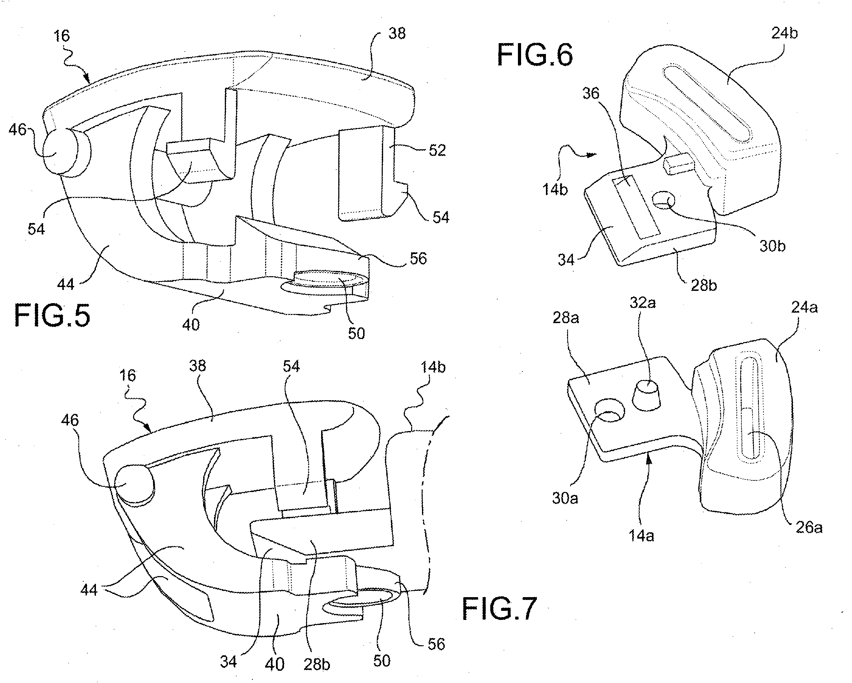

The locking member 16 further comprises a pair of coaxial hinge pins 46 (only one of which is shown in Figures 5 and 7), which are integrally formed by the member 16 each at the upper end of a respective connecting leg 44. The free ends of the hinge pins 46 projects outwardly of the connecting legs 44 and engage in respective support formations 48 in the cavity 18 for allowing the locking member 16 to tilt about the aforesaid tilting axis.

The locking member 16 is held by a spring (not shown), which abuts at its upper end against a spring seat 50 formed by the lower locking portion 40 and is support ed at its lower end by the bottom of the body 12, in a locked position (shown in Figure 6) in which the detent 42 engages in the recess 36 of the lower tongue-like element 14 and thus axially couples the assembly of the two tongue-like elements 14a, 14b to the body 12. In order to retain the locking member 16 in the vertical direction against the upward elastic force exerted by the respective spring, a pair of stop members 52 are provided which are formed as legs extending downwards from the lower control portion 40 of the locking member 16 at the opposite end to the hinge pin 46, and are provided with respective detents 54 cooperating with suitable abutment surfaces (not shown) formed by the body 12. As a result of a pressure on the upper control portion 38 by the user, the locking member 16 tilts about the tilting axis defined by the hinge pins 46 until it reaches the unlocked position, in which the detent 16 disengages from the recess 36 and therefore allows the ejection of the tongue-like elements 14a, 14b from the body 12.

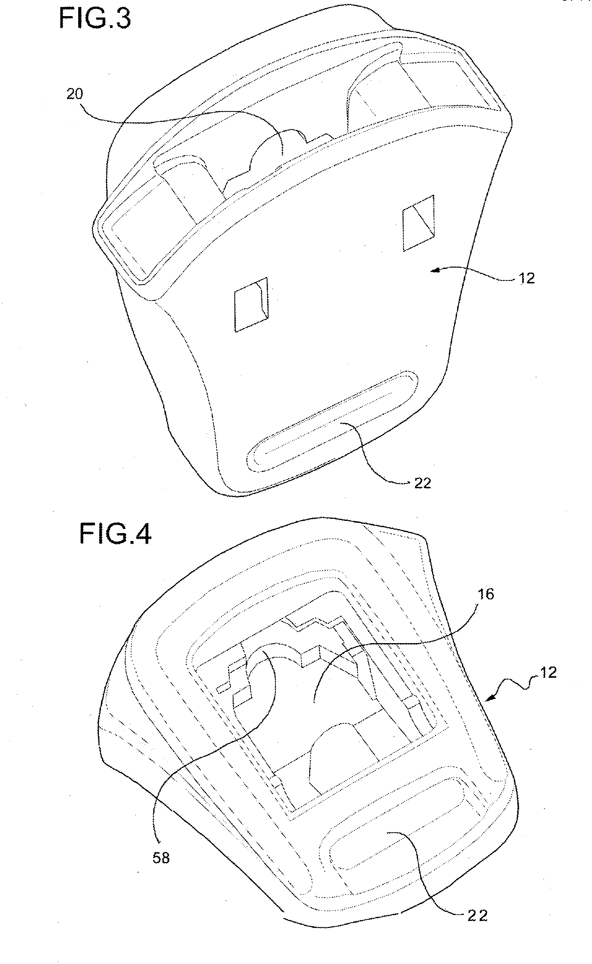

As can be seen in Figures 5 and 7, the lower locking portion 40 of the locking member 16 forms at its free end a projection 56, which in the illustrated example has a substantially semicircular shape in plan view and extends towards the tongue-like elements 14a, 14b. The lower face of the projection 56 forms the aforesaid spring seat 50. In the assembled condition the projection 56 of the locking member 16 is received in a recess 58 of corresponding shape provided on the bottom of the body 12, as shown in Figure 4. When the buckle is subject to a high tensile force as a result of an impact of the vehicle, the projection 56 comes into abutment against the inner surface of the recess 58 by virtue of the elasticity of the locking member 16, which is wholly made of plastic material (including the hinge pins 46). The tensile force is therefore transmitted directly from the assembly of the tongue-like elements to the buckle body without passing through the hinge pins, which results in an increase of the resisting cross-section of the buckle. The required tensile strength of the buckle is thus ensured.

As will be apparent in the light of the preceding description, the buckle according to the invention comprises a minimum number of components, since only the locking member and the associated spring are provided in addition to the buckle body and to the two tongue-like elements. The buckle body, the tongue-like elements and the locking member can be produced by plastic moulding and can be automatically assembled, which allows to reduce the overall costs of the buckle with respect to the prior art.

## Claims

1. Buckle (10) for restraint belts for motor vehicle safety seats for children, comprising a body (12), a pair of tongue-like elements (14a, 14b) and a locking member (16) adapted to assume a first locked position, in which it couples the tongue-like elements (14a, 14b) to the body (12), and a second unlocked position, in which it allows the ejection of the tongue-like elements (14a, 14b) from the body (12),
wherein the body (12), the tongue-like elements (14a, 14b) and the locking member (16) are made of plastic material,
wherein the locking member (16) integrally forms a locking portion (40) adapted to engage at least one of the tongue-like elements (14a, 14b) in said first position and a control portion (38) on which a user can act to cause the locking member (16) to move from the first position to the second one, and
wherein the locking member (16) is hinged to the body (12) so as to be able to tilt about a tilting axis substantially perpendicular to the direction of insertion of the tongue-like elements (14a, 14b) into the body (12) to move between said first and second positions, wherein the locking portion (40) of the locking member (16) forms at its free end a projection (56) extending towards the side of the body (12) on which the tongue-like elements (14a, 14b) are inserted and wherein the body (12) has a recess (58) for receiving said projection (56) **characterized in that** the locking member (16) integrally forms also a pair of hinge pins (46) which define said tilting axis and are supported for rotation in the body (12), and
**in that** the projection (56) and the recess (58) are configured in such a manner that when the buckle (10) is subject to an impulsive tensile force the projection (56) comes into abutment against the inner surface of the recess (58) by virtue of the elasticity of the locking member (16), whereby the tensile force is transmitted directly from the tongue-like elements (14a, 14b) to the body (12) of the buckle.

2. Buckle according to Claim 1, wherein the locking portion (40) of the locking member (16) forms at least one detent (42) for engaging in a corresponding recess (36) of a respective tongue-like element (14b) in said first position.

3. Buckle according to claim 1 or claim 2, wherein at least one of the body (12), the tongue-like elements (14a, 14b) and the locking member (16) comprises a metal core.

## Patentansprüche

1. Schnalle (10) für Rückhaltegurte für Kinder-Sicherheitssitze in Kraftfahrzeugen, die einen Körper (12), ein Paar zungenartiger Elemente (14a, 14b) und ein Arretierglied (16) umfasst, die geeignet ist, eine erste arretierte Position, in der sie die zungenartigen Elemente (14a, 14b) mit dem Körper (12) verbindet, und eine zweite nicht arretierte Position, in der sie den Auswurf der zungenartigen Elemente (14a, 14b) aus dem Körper (12) zulässt, einzunehmen,
wobei der Körper (12), die zungenartigen Elemente (14a, 14b) und das Arretierglied (16) aus einem Kunststoffmaterial gefertigt sind,
wobei das Arretierglied (16) integral einen Arretierabschnitt (40), der geeignet ist, um in der ersten Position in wenigstens eines der zungenartigen Elemente (14a, 14b) einzugreifen, und einen Steuerabschnitt (38) bildet, auf den ein Benutzer einwirken kann, um zu bewirken, dass das Arretierglied (16) sich von der ersten Position in die zweite bewegt, und
wobei das Arretierglied (16) an dem Körper (12) gelenkig angebracht ist, so dass es fähig ist, um eine Kippachse zu kippen, die im Wesentlichen senkrecht zu der Einsetzrichtung der zungenartigen Elemente (14a, 14b) in den Körper (12) ist, um sich zwischen den ersten und zweiten Positionen zu bewegen, wobei der Arretierabschnitt (40) des Arretierglieds (16) an seinem freien Ende einen Vorsprung (56) bildet, der sich in Richtung der Seite des Körpers (12) erstreckt, auf der die zungenartigen Elemente (14a, 14b) eingesetzt sind, und wobei der Körper (12) eine Vertiefung (58) zum Aufnehmen des Vorsprungs (56) hat,
**dadurch gekennzeichnet, dass** das Arretierglied (16) auch ein Paar von Drehstiften (46) integral bildet, welche die Kippachse definieren und für die Drehung in dem Körper (12) gehalten werden, und dadurch dass der Vorsprung (56) und die Vertiefung (58) in einer derartigen Weise aufgebaut sind, dass der Vorsprung (56), wenn die Schnalle (10) einer spontanen Zugkraft ausgesetzt wird, aufgrund der Elastizität des Arretierglieds (16) zum Anliegen gegen die Innenfläche der Vertiefung (58) kommt, wodurch die Zugkraft direkt von den zungenartigen Elementen (14a, 14b) auf den Körper (12) der Schnalle übertragen wird.

2. Schnalle nach Anspruch 1, wobei der Arretierabschnitt (40) des Arretierglieds (16) wenigstens eine Sperre (42) zum Eingreifen in eine entsprechende Vertiefung (36) eines jeweiligen zungenartigen Elements (14b) in der ersten Position bildet.

3. Schnalle nach Anspruch 1 oder Anspruch 2, wobei der Körper (12) und/oder die zungenartigen Elemente (14a, 14b) und/oder das Arretierglied (16) einen Metallkern aufweist/en.

## Revendications

1. Boucle (10) pour ceintures de sécurité pour sièges de sécurité automobile pour enfants, comprenant un corps (12), une paire d'éléments en forme de languettes (14a, 14b) et un élément de verrouillage (16) adapté pour prendre une première position, verrouillée, dans laquelle il accouple les éléments en forme de languettes (14a, 14b) au corps (12), et une deuxième position, déverrouillée, dans laquelle il permet l'éjection des éléments en forme de languettes (14a, 14b) par rapport au corps (12),
dans laquelle le corps (12), les éléments en forme de languettes (14a, 14b) et l'élément de verrouillage (16) sont en matière plastique,
dans laquelle l'élément de verrouillage (16) forme d'un seul tenant une partie de verrouillage (40) adaptée pour se mettre en prise avec au moins l'un des éléments en forme de languettes (14a, 14b) dans ladite première position et une partie de commande (38) sur laquelle un utilisateur peut agir pour faire passer l'élément de verrouillage (16) de la première position à la deuxième position, et
dans laquelle l'élément de verrouillage (16) est articulé sur le corps (12) de façon à pouvoir pivoter autour d'un axe de pivotement substantiellement perpendiculaire à la direction d'insertion des éléments en forme de languettes (14a, 14b) dans le corps (12) pour se déplacer entre lesdites première et deuxième positions,
dans laquelle la partie de verrouillage (40) de l'élément de verrouillage (16) forme à son extrémité libre une protubérance (56) qui s'étend vers le côté du corps (12) sur lequel les éléments en forme de languettes (14a, 14b) sont insérés et dans laquelle le corps (12) comporte un évidement (58) destiné à recevoir ladite protubérance 56),
**caractérisée en ce que** l'élément de verrouillage (16) forme en outre d'un seul tenant une paire d'axes d'articulation (46) qui définissent ledit axe de pivotement et qui sont supportés à rotation dans le corps (12), et **en ce que** la protubérance (56) et l'évidement (58) sont configurés de telle manière que lorsque la boucle (10) est soumise à une force de traction impulsionnelle, la protubérance (56) vient en appui contre la surface intérieure de l'évidement (58) grâce à l'élasticité de l'élément de verrouillage (16), moyennant quoi la force de traction est transmise directement des éléments en forme de languettes (14a, 14b) au corps (12) de la boucle.

2. Boucle selon la revendication 1, dans laquelle la partie de verrouillage (40) de l'élément de verrouillage (16) forme au moins un cliquet (42) destiné à s'engager dans un évidement correspondant (36) d'un élément en forme de languette respectif (14b) dans ladite première position.

3. Boucle selon la revendication 1 ou 2, dans laquelle au moins un élément parmi le corps (12), les éléments en forme de languettes (14a, 14b) et l'élément de verrouillage (16) comprend un noyau métallique.
